(19) Europäisches Patentamt / European Patent Office / Office européen des brevets

(11) **EP 4 180 474 A1**

(12) **EUROPÄISCHE PATENTANMELDUNG**

(43) Veröffentlichungstag:
**17.05.2023 Patentblatt 2023/20**

(21) Anmeldenummer: **21208019.6**

(22) Anmeldetag: **12.11.2021**

(51) Internationale Patentklassifikation (IPC):
*C08G 18/44* (2006.01)   *C08G 64/30* (2006.01)
*C08G 65/26* (2006.01)

(52) Gemeinsame Patentklassifikation (CPC):
**C08G 18/44; C08G 64/0208; C08G 64/305**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
• **Wolf, Aurel**
**42489 Wülfrath (DE)**
• **Linker, Olga**
**51371 Leverkusen (DE)**
• **Guertler, Christoph**
**50735 Köln (DE)**

(74) Vertreter: **Levpat**
**c/o Covestro AG**
**Gebäude K12**
**51365 Leverkusen (DE)**

(54) **VERFAHREN ZUR HERSTELLUNG VON POLYETHERCARBONATALKOHOLE**

(57) Die vorliegende Erfindung betrifft ein Verfahren zur Herstellung von Polyethercarbonatalkoholen durch Anlagerung von cyclischen Carbonaten an eine H-funktionelle Startersubstanz in Anwesenheit eines Katalysators, welcher kein DMC-Katalysator ist, dadurch gekennzeichnet, dass ein cyclisches Carbonsäureanhydrid in einem Anteil von 0,5 bis 10,0 Mol-%, bezogen auf das eingesetzte cyclische Carbonat, enthalten ist.

**Beschreibung**

Die vorliegende Erfindung betrifft ein Verfahren zur Herstellung von Polyethercarbonatalkohole durch katalytische Anlagerung cyclischen Carbonats an eine H-funktionelle Startersubstanz in Anwesenheit eines cyclischen Carbonsäureanhydrids.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572), Zinn-Verbindungen, wie Zinndioxid oder Dibutylzinnoxid (DE 2 523 352), Alkalimetallcarbonate oder -acetate (DE 1 495 299 A1) durchgeführt. Ebenfalls offenbart ist der Einsatz von $Na_3VO_4$ und $Na_2WO_4$ als Katalysatoren für die Herstellung von Polyethercarbonatpolyolen durch Anlagerung cyclischen Ethylencarbonats an Monoethylenglykol und Diethylenglykol (R.F. Harris, Journal of Applied Polymer Science, 1989, 37, 183-200). Der Nachteil der genannten Katalysator-Systeme ist die geringe Aktivität der Katalysatoren, die zu langen Reaktionszeiten führt.

Die Verwendung von cyclischen Carbonsäureanhydriden, wie z.B. Maleinsäureanhydrid, ist für die Herstellung von Polyetherestercarbonatpolyolen mittels DMC-Katalyse beispielsweise aus WO 2015/128277 A1 bekannt. Hierbei werden cyclische Carbonate als Suspensionsmittel eingesetzt, weil diese in Anwesenheit eines DMC-Katalysators nicht eingebaut werden. Einen Hinweis auf die Erhöhung der Reaktionsgeschwindigkeit durch cyclische Carbonsäureanhydride wird in WO 2015/128277 A1 nicht offenbart.

Die Aufgabe der vorliegenden Erfindung bestand deshalb darin, die Reaktionsgeschwindigkeit bei der Herstellung von Polyethercarbonatalkoholen durch Anlagerung von cyclischen Carbonaten zu erhöhen.

Überraschend wurde gefunden, dass die technische Aufgabe gelöst wird durch ein Verfahren zur Herstellung von Polyethercarbonatalkoholen, bevorzugt Polyethercarbonatpolyole, durch Anlagerung von cyclischen Carbonaten an eine H-funktionelle Startersubstanz in Anwesenheit eines Katalysators, welcher kein DMC-Katalysator ist, dadurch gekennzeichnet, dass ein cyclisches Carbonsäureanhydrid in einem Anteil von 0,5 bis 10,0 Mol-%, bezogen auf das eingesetzte cyclische Carbonat, enthalten ist.

Bei dem Verfahren kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Carbonat in den Reaktor gefüllt werden. Alternativ kann auch erst der Katalysator in einer H-funktionellen Startersubstanz suspendiert und anschließend die Suspension in den Reaktor gefüllt werden. Die Zugabe des cyclischen Carbonsäureanhydrids kann ebenso variabel gestaltet, dass das cyclische Carbonsäureanhydrid vor der Zugabe des Katalysators, in Mischung mit dem cyclischen Carbonat, der H-funktionellen Startersubstanz und/oder dem Katalysator oder nach der Zugabe der anderen Reaktanden in den Reaktor überführt wird. Bevorzugt wird das cyclische Carbonsäureanhydrid zusammen mit der H-funktionellen Startersubstanz und/oder dem cycl. Carbonat in den Reaktor vorgelegt.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C Inertgas (beispielsweise Argon oder Stickstoff) eingeleitet.

In einer alternativen bevorzugten Ausführungsform wird das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form, gelöster Form oder als Suspension in cyclischem Carbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 120°C bis 230°C, bevorzugt 130°C bis 200°C, besonders bevorzugt 140°C bis 190°C erhitzt, wobei gegebenenfalls ein Inertgas-Strom (beispielsweise von Argon oder Stickstoff) durch den Reaktor geleitet werden kann. Die Reaktion wird solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

Die Polyethercarbonatalkohole können in einem batch, semi-batch oder kontinuierlichen Verfahren hergestellt werden. Bevorzugt werden die Polyethercarbonatalkohole in einem kontinuierlichen Verfahren hergestellt, das sowohl eine kontinuierliche Polymerisation als auch eine kontinuierliche Zugabe der H-funktionellen Startersubstanz umfasst.

Gegenstand der Erfindung ist daher auch ein Verfahren, wobei H-funktionelle Startersubstanz, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist. Eine inkrementelle Zugabe von Katalysator und/oder Reaktand, der die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH$_2$ (primäre Amine), -NH- (sekundäre Amine), -SH und -CO$_2$H, bevorzugt sind -OH, -NH$_2$ und -CO$_2$H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C$_1$-C$_{24}$ Alkyl-Fettsäu-reester, die im Mittel mindestens 2 OH-Gruppen pro Molekül enthalten und Wasser, eingesetzt. Beispielhaft handelt es sich bei den C$_1$-C$_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatalkohole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3, Fettsäuren und monofunktionelle Alkohole mit 6 bis 25 Kohlenstoffatomen.

Katalysator

Als geeignete Katalysatoren, wobei DMC-Katalysatoren ausgenommen sind, für die Anlagerung von cyclischen Carbonat an H-funktionelle Startersubstanzen werden beispielsweise Diazabicycloundecen (DBU), 1,5,7-Triazabicyclo[4.4.0]dec-5-en (TBD) oder N-Heterocyclische Carbene (NHC),bevorzugt Katalysatoren gemäß Formel (I) eingesetzt

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $PO_4^{3-}$, $RCOO$, $VO_3^-$, $WO_4^{2-}$, $MoO_4^{2-}$ und $VO_4^{3-}$,
n ist 1, wenn X = $VO_3^-$, RCOO
n ist 2, wenn X = $SnO_3^{2-}$, $CO_3^{2-}$, $WO_4^{2-}$ oder $MoO_4^{2-}$
n ist 3, wenn X = $PO_4^{3-}$ oder $VO_4^{3-}$,
R ein organischer Rest ist.

Das Anion X des Katalysators gemäß Formel (I) ist bevorzugt $SnO_3^{2-}$, $VO_3^-$, $VO_4^{3-}$ oder $PO_4^{3-}$. Als Alkalimetallkation M wird bevorzugt $Na^+$ oder $K^+$ eingesetzt. Insbesondere bevorzugt wird als Katalysator eine Verbindung ausgewählt aus der Gruppe bestehen aus $Na_2SnO_3$, $K_2SnO_3$, $Na_3PO_4$ und $K_3PO_4$ eingesetzt, ganz besonders bevorzugt $Na_2SnO_3$ und $K_2SnO_3$. Der organische Rest R kann ein gesättigter oder ungesättigter, linearer oder verzweigter, aliphatischer oder cycloaliphatischer oder einen aromatischen oder araliphatischen Rest sein, der gegebenenfalls Heteroatome, wie N, S oder O enthalten kann. Bevorzugt handelt es sich bei dem organischen Rest R um einen C1 bis C12-Alkylrest, besonders bevorzugt handelt es sich um einen Methylrest.
Es kann ebenfalls ein Kronenether als Co-Katalysator eingesetzt werden. Kronenether sind makrocyclische Hohlraum-bildende Oligoether. Der Makrocyclus kann je nach Ringgröße unterschiedliche Hohlräume bilden, was auch durch die Anzahl der komplexierenden O-Atome gekennzeichnet ist. Übliche Vertreter der Kronenether sind [12]Krone-4, [15]Krone-5, [18]Krone-6, wobei erstere Zahl die Anzahl an Ringgliedern des Cyclus beschreibt und die zweite Zahl die Anzahl komplexierenden O-Atome oder Heteroatome.
Weiterhin kann der Makrocyclus des Kronenethers substituiert sein, wie beispielsweise mit Phenylgruppen oder cyclischen Alkylgruppen. Die Sauerstoffatome des Kronenethers können dabei teilweise oder vollständig durch N, P oder S substituiert sein, wie beispielsweise Diaza-[18]Krone-6. Bevorzugt werden Kronenether eingesetzt, welche als Heteroatom im Makrocyclus nur Sauerstoff aufweisen. Besonders bevorzugt wird als Kronenether mindestens eine Verbindung eingesetzt, die ausgewählt ist aus der Gruppe bestehend aus [12]Krone-4, [15]Krone-5, [18]Krone-6, [21] Krone-7 und [24]Krone-8.
Der als Co-Katalysator eingesetzte Kronenether wird bevorzugt in einem Verhältnis von Katalysator:Co-Katalysator von weniger als 1,0 : 10,0, besonders bevorzugt von 1,0 : 0,1 bis 1,0 : 5,0, insbesondere bevorzugt von 1,0 : 0,5 bis 1 : 1,2. Der Kronenether kann sowohl gemeinsam mit dem Katalysator als Gemisch als auch separat im eingesetzt werden.

Cyclisches Carbonsäureanhydrid

Erfindungsgemäß eingesetzte cyclische Carbonsäureanhydride können beispielsweise Verbindungen wie Bernsteinsäureanhydrid, Methylbernsteinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Glutarsäureanhydrid, Diglykolsäureanhydrid, 1,8-Naphthalsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Bevorzugt sind Bernsteinsäureanhydrid, Methylbernsteinsäureanhydrid, Maleinsäureanhydrid und Phthalsäureanhydrid, besonders bevorzugt Bernsteinsäureanhydrid und Phthalsäureanhydrid.
Der Anteil des cyclischen Carbonsäureanhydrids beträgt erfindungsgemäß 0,5 bis 10 Mol-%, bevorzugt 1 bis 6 Mol-%, jeweils bezogen auf das eingesetzte cyclische Carbonat.
Die nach dem erfindungsgemäßen Verfahren erhaltenen Polyethercarbonatalkohole, bevorzugt Polyethercarbonatpolyole, können beispielsweise durch Umsetzung mit Di- und/oder Polyisocyanaten zu Polyurethanen weiterverarbeitet werden.
Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten zu finden.

**Experimenteller Teil**

Das Molekulargewicht $M_n$ der entstandenen Polyethercarbonatalkohole wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen und Polystyrolproben mit bekannter Molmasse zur Kalibrierung verwendet.

Der Anteil an eingebautem $CO_2$ im resultierenden Polyethercarbonatalkohol ($CO_2$-Gehalt) wurde mittels $^1$H-NMR Spektroskopie (Firma Bruker, AV III HD 600, 600 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt: Für verbleibendes monomeres Ethylencarbonat (Signal bei 4,53 ppm) Resultierend aus im Polyethercarbonatalkohol eingebautem Kohlendioxid (Resonanzen bei 4,37-3,21 und ggf. 4,19-4,07 ppm - abhängig vom gewählten Startermolekül), Polyetherpolyol (d.h. ohne eingebautem Kohlendioxid) mit Resonanzen bei 3,80-3,55 ppm.

Der Molenanteil des im Polymer eingebauten Carbonats in der Reaktionsmischung wird nach Formel (I) wie folgt berechnet, wobei folgende Abkürzungen verwendet werden:

F(4,53) = Fläche der Resonanz bei 4,53 ppm für cyclisches Carbonat (entspricht vier Protonen)

F(4,37–4,21) = Fläche der Resonanz bei 4,37–4,21 ppm für Polyethercarbonatalkohol.

F(4,19–4,07) = Fläche der Resonanz bei 4,19–4,07 ppm for Polyethercarbonatalkohol (Die Summe von F(4,37–4,21) und F(4,19–4,07) entspricht 4 Protonen)

F(3,8–3,55) = Fläche der Resonanz bei 3,8–3,55 ppm für Polyetherpolyol (entspricht 4 Protonen)

Unter Berücksichtigung der relativen Intensitäten wurde gemäß der folgenden Formel (I) für das polymer gebundene Carbonat ("lineares Carbonat" LC) in der Reaktionsmischung in Gew.-% berechnet:

$$LC_{gew.\%} = \frac{[F(4,37-4,21)+F(4,19-4,07)] \cdot 88}{N} \cdot 100 \ \% \qquad (I)$$

wobei sich der Wert für $N$ ("Nenner" $N$) nach Formel (III) berechnet:

$$N = [(4,37-4,21) + F(4,19-4,07)] \cdot 88 + F(3,8-3,55) \cdot 44 \qquad (II)$$

Der Faktor 88 resultiert aus der Summe der Molmassen von $CO_2$ (Molmasse 44 g/mol) und der von Ethylenoxid (Molmasse 44 g/mol), der Faktor 44 resultiert aus der Molmasse von Ethylenoxid. Der Gewichtsanteil (in Gew.-%) an $CO_2$ im Polyethercarbonatalkohol wurde nach Formel (III) berechnet:

$$CO_{2\,gew.\%} = LC_{gew.\%} \cdot \frac{44}{88} \qquad (III)$$

Um aus den Werten der Zusammensetzung der Reaktionsmischung die Zusammensetzung bezogen auf den Polymer-Anteil (bestehend aus Polyethercarbonatalkohol, aufgebaut aus Starter, cyclischem Ethylencarbonat), wurden die Nicht-Polymer-Bestandteile der Reaktionsmischung (d.h. nicht umgesetztes cyclisches Ethylencarbonat) rechnerisch eliminiert. Der Gewichtsanteil der Carbonat-Wiederholungseinheiten im Polyethercarbonatalkohol wurde in einen Gewichtsanteil Kohlendioxid mittels des Faktors F=44/(44+44) umgerechnet (Siehe Formel III). Die Angabe des $CO_2$-Ge-

halts im Polyethercarbonatalkohol ("eingebautes $CO_2$"; siehe nachfolgende Beispiele) ist normiert auf das Polyethercarbonatalkohol-Molekül, das bei der ringöffnenden Polymerisation entstanden ist.

Der Umsatz der Reaktionslösung wird nach Formel (IV) wie folgt berechnet, wobei folgende Abkürzungen verwendet werden (exemplarisch dargestellt für 1,6-Hexandiol als H-funktionelle Startersubstanz, für alternative Starter wurde die Berechnung entsprechend angepasst):

$$F(1.78 - 1.29) = \text{Normierte Fläche der Resonanz bei } 1.78 - 1.29 \text{ ppm für 1,6-Hexandiol (definiert als 8 Protonen)}$$

$$F(4.36 - 3.20) = \text{Normierte Fläche der Resonanz bei } 4.36 - 3.20 \text{ ppm für Polyethercarbonatalkohol und 1,6-Hexandiol (verbleibende 4 Protonen).}$$

Aus dem Verhältnis von H-funktioneller Startersubstanz (z.B. 1,6-Hexandiol: 12 H) zu Monomer ergibt sich, dass 31,57 Protonen aus cEC im Reaktionsgemisch vorliegen (Stoffmengenverhältnis von $n(\text{cEC})/n(\text{1,6-HD}) = 7.89$).

Unter Berücksichtigung der relativen Intensitäten wurde gemäß der folgenden Formel (IV) der Umsatz berechnet:

$$Umsatz_{mol\%} = \frac{F(4.36 - 3.20) - \frac{F(1.78 - 1.29)}{2}}{31,57} \cdot 100\,\% \qquad \text{(IV)}$$

Eingesetzte Rohstoffe:

Alle aufgezählten Chemikalien wurden vom genannten Hersteller in der angegebenen Reinheit erworben und ohne weitere Behandlung für die Synthese von Polyethercarbonatalkohols verwendet.

| | |
|---|---|
| cEC: | Cyclisches Ethylencarbonat (Sigma-Aldrich 99 %) |
| Hexandiol: | 1,6-Hexandiol (Sigma-Aldrich 97%) |
| $K_2SnO_3 \cdot H_2O$: | Kaliumstannat Trihydrat (Sigma-Aldrich 99,9%) |
| $K_3PO_4$: | Kaliumphosphat (Sigma-Aldrich $\geq$ 98%) |
| BSA: | Bernsteinsäureanhydrid (abcr 99%) |
| PSA: | Phthalsäureanhydrid (Sigma-Aldrich $\geq$ 99%) |

**Beispiel 1: Herstellung eines Polyethercarbonatalkohols durch Ringöffnungspolymerisation von cEC mit Hexandiol als Starter und $K_3PO_4$ als Katalysator bei 170 °C**

In einem 250 mL Vierhalsglaskolben mit Rückflusskühler, KPG-Rührer, Thermofühler, Stickstoffzuleitung und Überdruckventil wurden 100 g Ethylencarbonat, 19,45 g 1,6-Hexandiol und 1,20 g $K_3PO_4$ zugegeben. Es wurden für 10 Minuten 10L/h Stickstoff eingeleitet. Das Gemisch wurde unter Rühren bei 300 U/min auf 170 °C aufgeheizt. Die Reaktionsmischung wurde bis zum vollständigen Umsatz von Ethylencarbonat bei der eingestellten Temperatur gerührt. Als Zeitpunkt des vollständigen Umsatzes wurde der Moment genommen, bei dem die Gasentwicklung zum Erliegen kommt. Das Reaktionsgemisch wurde 60 min bei 8500 rpm zentrifugiert und anschließend dekantiert.

**Beispiel 2: Herstellung eines Polyethercarbonatalkohols durch Ringöffnungspolymerisation von cEC mit Hexandiol als Starter und $K_3PO_4$ als Katalysator bei 170 °C in Anwesenheit von 2 mol% BSA**

Die Durchführung erfolgte gemäß Beispiel 1, wobei jedoch zusätzlich 2,27 g Bernsteinsäureanhydrid (BSA) eingesetzt wurden.

**Beispiel 3: Herstellung eines Polyethercarbonatalkohols durch Ringöffnungspolymerisation von cEC mit Hexandiol als Starter und $K_3PO_4$ als Katalysator bei 170 °C in Anwesenheit von 5 mol% BSA**

Die Durchführung erfolgte gemäß Beispiel 1, wobei jedoch zusätzlich 5,68 g Bernsteinsäureanhydrid (BSA) eingesetzt wurden.

**Beispiel 4: Herstellung eines Polyethercarbonatalkohols durch Ringöffnungspolymerisation von cEC mit Hexandiol als Starter und $K_3PO_4$ als Katalysator bei 170 °C in Anwesenheit von 2 mol% PSA**

Die Durchführung erfolgte gemäß Beispiel 1, wobei jedoch zusätzlich 3,36 g Phthalsäureanhydrid (PSA) eingesetzt wurden.

**Beispiel 5: Herstellung eines Polyethercarbonatalkohols durch Ringöffnungspolymerisation von cEC mit Hexandiol als Starter und $K_3PO_4$ als Katalysator bei 170 °C in Anwesenheit von 5 mol% PSA**

Die Durchführung erfolgte gemäß Beispiel 1, wobei jedoch zusätzlich 8,41 g Phthalsäureanhydrid (PSA) eingesetzt wurden.

**Beispiel 6: Herstellung eines Polyethercarbonatalkohols durch Ringöffnungspolymerisation von cEC mit Hexandiol als Starter und $K_2SnO_3 \cdot 3H_2O$ als Katalysator bei 150 °C**

In einem 500 mL Vierhalsglaskolben mit Rückflusskühler, KPG-Rührer, Thermofühler, Stickstoffzuleitung und Überdruckventil wurden 200 g Ethylencarbonat, 38,90 g 1,6-Hexandiol und 3,39 g $K_2SnO_3 \cdot 3H_2O$ zugegeben. Es wurden für 10 Minuten 10 L/h Stickstoff eingeleitet. Das Gemisch wurde unter Rühren bei 300 U/min auf 150 °C aufgeheizt. Die Reaktionsmischung wurde bis zum vollständigen Umsatz von Ethylencarbonat bei der eingestellten Temperatur gerührt. Als Zeitpunkt des vollständigen Umsatzes wurde der Moment genommen, bei dem die Gasentwicklung zum Erliegen kommt. Das Reaktionsgemisch wurde 60 min bei 8500 rpm zentrifugiert und anschließend dekantiert.

**Beispiel 7: Herstellung eines Polyethercarbonatalkohols durch Ringöffnungspolymerisation von cEC mit Hexandiol als Starter und $K_2SnO_3 \cdot 3H_2O$ als Katalysator bei 150 °C in Anwesenheit von 2 mol% BSA**

Die Durchführung erfolgte gemäß Beispiel 6, wobei jedoch zusätzlich 4,54 g Bernsteinsäureanhydrid (BSA) eingesetzt wurden.

**Beispiel 8: Herstellung eines Polyethercarbonatalkohols durch Ringöffnungspolymerisation von cEC mit Hexandiol als Starter und $K_2SnO_3 \cdot 3H_2O$ als Katalysator bei 150 °C in Anwesenheit von 5 mol% BSA**

Die Durchführung erfolgte gemäß Beispiel 6, wobei jedoch zusätzlich 4,54 g Bernsteinsäureanhydrid (BSA) eingesetzt wurden.

**Beispiel 9: Herstellung eines Polyethercarbonatalkohols durch Ringöffnungspolymerisation von cEC mit Hexandiol als Starter und $K_2SnO_3 \cdot 3H_2O$ als Katalysator bei 150 °C in Anwesenheit von 25 mol% BSA**

Die Durchführung erfolgte gemäß Beispiel 6, wobei jedoch zusätzlich 56,81 g Bernsteinsäureanhydrid (BSA) eingesetzt wurden.

**Beispiel 10: Herstellung eines Polyethercarbonatalkohols durch Ringöffnungspolymerisation von cEC mit Hexandiol als Starter und $K_2SnO_3 \cdot 3H_2O$ als Katalysator bei 150 °C in Anwesenheit von 2 mol% PSA**

Die Durchführung erfolgte gemäß Beispiel 6, wobei jedoch zusätzlich 6,72 g Phthalsäureanhydrid (PSA) eingesetzt wurden.

**Beispiel 11: Herstellung eines Polyethercarbonatalkohols durch Ringöffnungspolymerisation von cEC mit Hexandiol als Starter und $K_2SnO_3 \cdot 3H_2O$ als Katalysator bei 150 °C in Anwesenheit von 25 mol% PSA**

Die Durchführung erfolgte gemäß Beispiel 6, wobei jedoch zusätzlich 84,10 g Phthalsäureanhydrid (PSA) eingesetzt wurden.

Die gemessenen Eigenschaften der Polyethercarbonatalkohole aus den Beispielen sind in der Tabelle 1 dargestellt. In den Beispielen 1 und 6 wurden als Referenz Polyethercarbonatalkohole ohne eine Zugabe von cyclischen Carbonsäureanhydriden hergestellt. Wird ein cyclisches Carbonsäureanhydrid im erfindungsgemäßen Anteil eingesetzt, so verläuft die Reaktion schneller und eine Reduktion der Zeit t bis zum vollständigen Umsatz gegenüber den Referenzbeispielen ohne ein cyclisches Carbonsäureanhydrid wird beobachtet (Beispiele 2 bis 5, 7, 8 und 10). Wird das cyclische Carbonsäureanhydrid in einem Anteil über dem erfindungsgemäßen Bereich eingesetzt, dann wird sowohl die Zeit t bis zum vollständigen Umsatz deutlich verlängert und der Anteil des eingebauten $CO_2$ verringert sich.

**Tabelle 1:** Ergebnisse der ringöffnenden Polymerisation von cEC

| Beispiel | Anhydrid | Anteil [mol%] | Katalysator | PDI | $CO_2$ [wt%] | $t$ [min] |
|----------|----------|---------------|-------------|-----|--------------|-----------|
| 1* | Kein | 0 | $K_3PO_4$ | 2,06 | 18,4 | 160 |
| 2 | BSA | 2 | $K_3PO_4$ | 1,96 | 17,0 | 114 |
| 3 | BSA | 5 | $K_3PO_4$ | 2,07 | 16,7 | 108 |
| 4 | PSA | 2 | $K_3PO_4$ | 1,97 | 12,9 | 120 |
| 5 | PSA | 5 | $K_3PO_4$ | 1,99 | 17,7 | 125 |
| 6* | Kein | 0 | $K_2SnO_3\cdot 3H_2O$ | 2,22 | 23,7 | 217 |
| 7 | BSA | 2 | $K_2SnO_3\cdot 3H_2O$ | 2,06 | 29,4 | 65 |
| 8 | BSA | 5 | $K_2SnO_3\cdot 3H_2O$ | 2,25 | 25,7 | 150 |
| 9* | BSA | 25 | $K_2SnO_3\cdot 3H_2O$ | 2,19 | 13,9 | 405 |
| 10 | PSA | 2 | $K_2SnO_3\cdot 3H_2O$ | 2,01 | 29,9 | 150 |
| 11* | PSA | 25 | $K_2SnO_3\cdot 3H_2O$ | 2,29 | 17,1 | 745 |
| * Referenz- oder Vergleichsbeispiel | | | | | | |

**Patentansprüche**

1. Verfahren zur Herstellung von Polyethercarbonatalkoholen durch Anlagerung von cyclischen Carbonaten an eine H-funktionelle Startersubstanz in Anwesenheit eines Katalysators, welcher kein DMC-Katalysator ist, **dadurch gekennzeichnet, dass** ein cyclisches Carbonsäureanhydrid in einem Anteil von 0,5 bis 10,0 Mol-%, bezogen auf das eingesetzte cyclische Carbonat, enthalten ist.

2. Verfahren gemäß Anspruch 1, **dadurch gekennzeichnet, dass** ein Katalysator gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $PO_4^{3-}$, RCOO, $VO_3^-$, $WO_4^{2-}$, $MoO_4^{2-}$ und $VO_4^3$,
n ist 1, wenn X = $VO_3^-$, RCOO,
n ist 2, wenn X = $SnO_3^{2-}$, , $CO_3^{2-}$, $WO_4^{2-}$ oder $MoO_4^{2-}$,
n ist 3, wenn X = $PO_4^3$ oder $VO_4^{3-}$,
R ein organischer Rest ist, bevorzugt C1 bis C12-Alkylrest,

eingesetzt wird.

3. Verfahren gemäß Anspruch 1, **dadurch gekennzeichnet, dass** ein Katalysator gemäß der Formel (I)

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $PO_4^{3-}$, $SnO_3^{2-}$, $VO_3^-$, $WO_4^{2-}$, $MoO_4^{2-}$ und $VO_4^{3-}$,
n ist 1, wenn X = $VO_3^-$,
n ist 2, wenn X = $SnO_3^{2-}$, $WO_4^{2-}$ oder $MoO_4^{2-}$
n ist 3, wenn X = $PO_4^{3-}$ oder $VO_4^{3-}$,

eingesetzt wird.

4. Verfahren gemäß einem der Ansprüche 2 oder 3, **dadurch gekennzeichnet, dass** in Formel (I) M ausgewählt ist aus den Alkalimetallkationen $Na^+$ oder $K^+$.

5. Verfahren gemäß einem der Ansprüche 2 bis 4, **dadurch gekennzeichnet, dass** in Formel (I) X ausgewählt ist aus den Anionen $PO_4^{3-}$, $SnO_3^{2-}$ $VO^{3-}$ oder $VO_4^{3-}$.

6. Verfahren gemäß Anspruch 1, **dadurch gekennzeichnet, dass** als Katalysator eine Verbindung ausgewählt aus der Gruppe bestehend aus $Na_2SnO_3$, $K_2SnO_3$, $Na_3PO_4$ und $K_3PO_4$ eingesetzt wird.

7. Verfahren gemäß einem der Ansprüche 1 bis 6, **dadurch gekennzeichnet, dass** das cyclische Carbonsäureanhydrid in einem Anteil von 1 bis 6 Mol-%, bezogen auf das eingesetzte cyclische Carbonat, enthalten ist.

8. Verfahren gemäß einem der Ansprüche 1 bis 7, **dadurch gekennzeichnet, dass** als cyclische Carbonsäureanhydrid mindestens eine Verbindung ausgewählt aus der Gruppe bestehend aus Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Methylbernsteinsäureanhydrid Glutarsäureanhydrid, Diglykolsäureanhydrid, 1,8-Naphthalsäureanhydrid, Bern-steinsärueanhyderid, Dodecenylbernsteinsäureanhydrid, Tetradecenylbernsteinsäureanhydrid, Hexadecenylbern-steinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, und Allylnorbornendisäureanhydrid eingesetzt werden.

9. Verfahren gemäß einem der Ansprüche 1 bis 8, **dadurch gekennzeichnet, dass** die eingesetzte H-funktionelle Startersubstanz ausgewählt ist aus mindestens einer Verbindung der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist und die Polye-therpolyole ein Molekulargewicht $M_n$ im Bereich von 62 bis 4500 g/mol und eine Funktionalität von 2 bis 3 aufweisen, Fettsäuren und monofunktionelle Alkohole mit 6 bis 25 Kohlenstoffatomen.

10. Verfahren gemäß einem der Ansprüche 1 bis 8, **dadurch gekennzeichnet, dass** als cyclisches Carbonat Propylencarbonat, Ethylencarbonat oder eine Mischung aus Propylencarbonat und Ethylencarbonat eingesetzt wird.

11. Verfahren gemäß einem der Ansprüche 1 bis 10, **dadurch gekennzeichnet, dass** der Katalysator in einem Anteil von 10 bis 50000 ppm, besonders bevorzugt 20 bis 30000 ppm und höchst bevorzugt 50 bis 20000 ppm vorliegt.

12. Verfahren gemäß einem der Ansprüche 1 bis 11, **dadurch gekennzeichnet, dass** H-funktionelle Startersubstanz, cyclisches Propylencarbonat und Katalysator kontinuierlich in den Reaktor zudosiert wird.

13. Verfahren gemäß Anspruch 12, **dadurch gekennzeichnet, dass** das resultierende Produkt kontinuierlich aus dem Reaktor abgeführt wird.

14. Polyethercarbonatalkohol erhältlich nach einem Verfahren gemäß einem der Ansprüche 1 bis 13.

15. Verwendung eines Polyethercarbonatalkohols gemäß Anspruch 14 in Wasch- und Reinigungsmittelformulierungen, Bohrflüssigkeiten, Kraftstoffadditiven, ionischen und nicht-ionischen Tensiden, Dispergiermitteln, Schmiermitteln, Prozesschemikalien für die Papier- oder Textilherstellung, kosmetischen Formulierungen oder in der Herstellung von Polyurethanen.

Europäisches
Patentamt

European
Patent Office

Office européen
des brevets

# EUROPÄISCHER RECHERCHENBERICHT

**Nummer der Anmeldung**

**EP 21 20 8019**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2021/032553 A1 (COVESTRO INTELLECTUAL PROPERTY GMBH & CO KG [DE] ET AL.) 25. Februar 2021 (2021-02-25) * Seite 3 – Seite 3; Beispiel 1 * ----- | 1-15 | INV. C08G18/44 C08G64/30 C08G65/26 |

**RECHERCHIERTE SACHGEBIETE (IPC)**

C08G
C09J

Der vorliegende Recherchenbericht wurde für alle Patentansprüche erstellt

| Recherchenort | Abschlußdatum der Recherche | Prüfer |
|---|---|---|
| Den Haag | 29. April 2022 | Adigbli, Francis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 8019

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2022

| Im Recherchenbericht angeführtes Patentdokument | Datum der Veröffentlichung | Mitglied(er) der Patentfamilie | Datum der Veröffentlichung |
|---|---|---|---|
| WO 2021032553 A1 | 25-02-2021 | CN 114206981 A<br>WO 2021032553 A1 | 18-03-2022<br>25-02-2021 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0343572 A
- DE 2523352
- DE 1495299 A1
- WO 2015128277 A1
- EP 1359177 A

**In der Beschreibung aufgeführte Nicht-Patentliteratur**

- **R.F. HARRIS.** *Journal of Applied Polymer Science,* 1989, vol. 37, 183-200